# EUROPEAN PATENT APPLICATION

(11) **EP 4 693 699 A1**
(43) Date of publication of application: **11.02.2026**
(21) Application number: 24843242.9
(22) Date of filing: 15.04.2024
(51) Int. Cl.: H01M 50/531, H01M 50/15

(54) **BATTERY CELL AND METHOD OF MANUFACTURING SAME**

(30) Priority: 14.07.2023 KR 20230091926
(71) Applicant: SK On Co., Ltd., Seoul 03161 (KR)
(72) Inventor: KWAK, Seung-Ho, Daejeon 34124 (KR)
(74) Representative: Prüfer & Partner mbB Patentanwälte · Rechtsanwälte
(86) International application number: PCT/KR2024/005014
(87) International publication number: WO 2025/018518

(57) **Abstract**

According to an embodiment of the present invention, provided is a battery cell comprising: an electrode assembly in which a plurality of electrode plates are stacked and an uncoated portion protrudes to at least one side along a first direction; and a cap assembly disposed to face the electrode assembly in the direction of protrusion of the uncoated region and including a current collector electrically connected to the uncoated portion, wherein at least a portion of the current collector protrudes toward the electrode assembly in the first direction to face and contact the uncoated portion in a direction perpendicular to the first direction.

## Description

### Technical Field

The present disclosure relates to a battery cell and a method of manufacturing the same.

### Background Art

Unlike primary batteries, secondary batteries (battery cells) may be conveniently charged and discharged, and are have attracted significant attention as power sources for various mobile devices and electric vehicles.

Such secondary batteries may have a structure in which an electrode assembly formed by stacking a cathode plate, an anode plate, and a separator or by winding the cathode plate, the anode plate, and the separator into a roll is housed within a case.

Meanwhile, the electrode assembly may be electrically connected to an external terminal of the case within the case. When impact is applied to the battery cell, the impact may be transmitted to the electrode assembly within the battery cell, potentially breaking the electrical connection between the electrode assembly and the external terminal.

In addition, the electrode assembly and the external terminal may be electrically connected through a separate connecting member. In this case, there is a risk that the connecting member may break under the impact applied to the battery cell or during the assembly process of the battery cell, resulting in malfunction of the battery cell.

Accordingly, there is a need for a structure in which electrical connection may be stably maintained between the electrode assembly and the external terminal of the battery cell under the external impact or during the assembly process, and the assembly process may be simplified.

### Disclosure of Invention

### Technical Problem

An aspect of the present disclosure is to provide a battery cell with improved connection stability with a foil.

Another aspect of the present disclosure is to provide a method of manufacturing a battery cell in which a cap assembly need not be separately coupled after an electrode assembly is housed in a case.

### Solution to Problem

According to an aspect of the present disclosure, a battery cell may include: an electrode assembly in which a plurality of electrode plates are stacked and a foil protrudes to at least one side along a first direction; and a cap assembly disposed to face the electrode assembly in the direction in which the foil protrudes, and including a current collector electrically connected to the foil, in which at least a portion of the current collector may protrude toward the electrode assembly in the first direction to face and contact the foil in a direction perpendicular to the first direction.

The cap assembly may further include a terminal part, at least a portion of which is exposed to an outside and connected to an external power supply, and the current collector may contact the terminal part and the foil, respectively, to electrically connect the foil and the terminal part.

The current collector may include: a first current collecting member contacting the terminal part; and a second current collecting member protruding from the first current collecting member toward the electrode assembly and contacting the foil.

The foil and the second current collecting member may face each other in the direction in which the plurality of electrode plates are stacked.

The second current collecting member may be bent into an "¬"-shape on at least one side of the first current collecting member.

The electrode assembly may be provided in plurality, and the second current collecting member may be provided in a number corresponding to the number of electrode assemblies, and each of the second current collecting members may contact the foil of a respective one of the plurality of electrode assemblies.

The plurality of second current collecting members may face each other in the direction perpendicular to the direction in which the foil protrudes.

The foil of the plurality of electrode assemblies disposed at an outermost portion may face and contact an outer side surface of the second current-collecting member disposed at an outermost portion.

A thickness (a) of the second current collecting member may be 0.3 mm to 4 mm.

An extended length b of the second current collecting member may be 4 mm to 10 mm.

The foil may protrude to both sides of the electrode assembly, and the cap assembly may be disposed on both sides of the electrode assembly, respectively, to face each of the foils.

The battery cell may further include: a case housing the electrode assembly and having an opening facing the foil, in which the cap assembly may be coupled to the case to close the opening of the case.

The case may include a first casing member that encloses a portion of the electrode assembly and a second casing member that encloses the remainder, and the first casing member and the second casing member, which are separated from each other, may be coupled to each other to house the electrode assembly.

The foil may protrude to both sides of the electrode assembly, and one of the first casing member and the second casing member may enclose the upper surface of the electrode assembly facing the direction perpendicular to the direction in which the foil protrudes and one side surface of the electrode assembly, and the other of the first casing member and the second casing member may enclose a lower surface of the electrode assembly facing the upper surface of the electrode assembly and the other side surface of the electrode assembly.

The first casing member and the second casing member may have a same shape as each other and are disposed to be centrally symmetric with respect to the electrode assembly.

The first casing member and the second casing member may be bent to enclose at least a portion of the electrode assembly and provided in an "L"-shape.

One end of each of the first casing member and one end of the second casing member may be formed with a stepped portion so as to be engaged with the other end of the second casing member and the other end of the first casing member, respectively.

The case may have four corners relative to a side surface, and two of the four corners may be formed with a rounded portion, and the remaining two may be formed with a right-angled portion.

Each of the two rounded portions and each of the two right-angled portions may be disposed to be centrally symmetric with respect to the electrode assembly to face each other diagonally.

According to another aspect of the present disclosure, a battery module may include at least one battery cell, in which the battery cell may include: an electrode assembly in which a plurality of electrode plates are stacked and a foil protrudes to at least one side along a first direction; and a cap assembly disposed to face the electrode assembly in the direction in which the foil protrudes, and including a current collector electrically connected to the foil, and at least a portion of the current collector may protrude toward the electrode assembly in the first direction to face and contact the foil in a direction perpendicular to the first direction.

According to still another aspect of the present disclosure, a battery pack may include at least one battery cell, in which the battery cell may include: an electrode assembly in which a plurality of electrode plates are stacked and a foil protrudes to at least one side along a first direction; and a cap assembly disposed to face the electrode assembly in the direction in which the foil protrudes, and including a current collector electrically connected to the foil, and at least a portion of the current collector may protrude toward the electrode assembly in the first direction to face and contact the foil in a direction perpendicular to the first direction.

According to still yet another aspect of the present disclosure, a method of manufacturing a battery cell may include: disposing a cap assembly including a current collector electrically connected to a foil on both sides of an electrode assembly in which a plurality of electrode plates are stacked and the foil protrudes to both sides, and connecting the cap assembly to both sides of the electrode assembly; and covering an exposed surface of the electrode assembly exposed from the cap assembly with a case to house the electrode assembly.

The case may include a first casing member that encloses a portion of the exposed surface of the electrode assembly and a second casing member that encloses the remainder, and the first casing member and the second casing member may be coupled to each other in a direction perpendicular to a direction in which the foil protrudes to house the electrode assembly.

In the connecting of the cap assembly, the foil and the current collecting member may overlap each other in the direction perpendicular to the direction in which the foil protrudes, and may be welded.

The foregoing describes the means according to the present disclosure, but is exemplary, and it should be understood that other configurations not mentioned herein may also fall within the scope of the present disclosure.

### Advantageous Effects of Invention

In accordance with the battery cell according to an aspect of the present disclosure, it is possible to improve the connection stability with the foil.

In accordance with the method of manufacturing a battery cell according to an aspect of the present disclosure, it is possible to improve the efficiency of the manufacturing process.

### Brief Description of Drawings

FIG. 1 is a perspective view of a conventional battery cell.
FIG. 2 is a partial cross-sectional view of the conventional battery cell.
FIG. 3 is a perspective view of the battery cell according to an embodiment.
FIG. 4 is an exploded perspective view of the battery cell according to an embodiment.
FIG. 5 is an exploded perspective view of a cap assembly according to an embodiment.
FIG. 6 is a partial cross-sectional view of the battery cell according to an embodiment.
FIG. 7 is a perspective view of a case according to an embodiment.
FIG. 8 is a cross-sectional view of the case according to an embodiment.
FIG. 9 is a diagram illustrating an assembly sequence of the battery cell according to an embodiment.
FIG. 10 is a diagram of a battery module and a battery pack including a battery cell according to an embodiment.
FIG. 11 is a diagram illustrating the battery module mounted on the battery pack according to an embodiment.

### Best Mode for the Invention

Before a detailed description of embodiments, the terms or words used in the following description and claims should not be interpreted as being limited to typical meanings or dictionary definitions, but should be interpreted as having meanings and concepts relevant to the technical scope of the present disclosure based on the rule according to which an inventor can appropriately define the concept of the term to describe most appropriately the best method he or she knows for carrying out the invention.

Like reference numerals indicated in each drawing denote parts or components performing substantially the same functions. For convenience of explanation and understanding, different embodiments will be described using the same reference numerals.

In the following description, singular forms include plural forms unless interpreted otherwise in context. It should be further understood that terms "include" or "constitute" specify the presence of features, numerals, steps, operations, components, parts mentioned in the present specification, or combinations thereof, but do not preclude the presence or addition of one or more other features, numerals, steps, operations, components, parts, or combinations thereof.

In addition, in the following description, the terms "upper side", "upper portion", "lower side", "lower portion", "side surface", "front surface", "rear surface", and the like, are represented based on directions illustrated in the drawings and may be differently represented when directions of corresponding targets are changed.

In addition, in the following description and claims, terms including ordinal numbers such as "first" and "second" may be used to distinguish between elements. These ordinal numbers are used to distinguish the same or similar components from each other, and the meaning of the term should not be construed as being limited due to the use of these ordinal numbers. For example, components combined with such ordinal numbers should not be construed as being limited in terms of use order or arrangement order by the numbers. If necessary, each ordinal number may be used interchangeably.

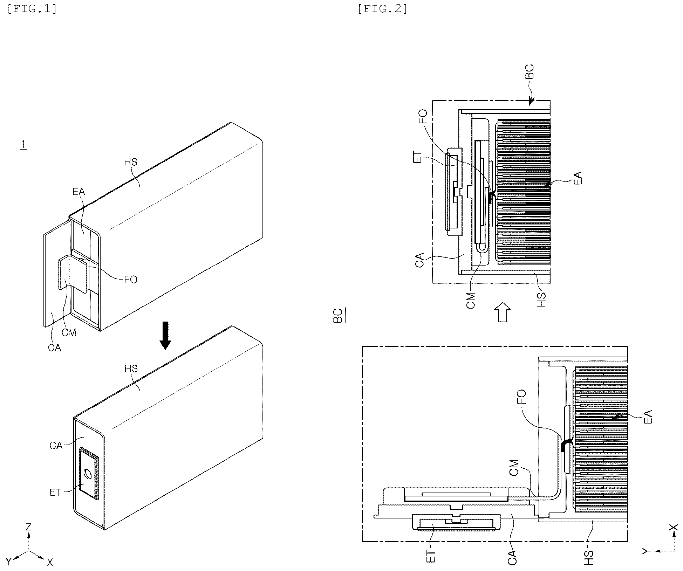

First, a structure of a conventional battery cell 1 will be described with reference to FIGS. 1 and 2.

FIG. 1 is a perspective view of a conventional battery cell, and FIG. 2 is a partial cross-sectional view of the conventional battery cell. Referring to FIGS. 1 and 2, the conventional battery cell 1 may include an electrode assembly EA with a protruding foil FO, a housing HS in which the electrode assembly EA is housed, a cap assembly CA coupled to the housing HS, and an extension member CM connecting the foil FO and the cap assembly CA to each other.

The upper drawing of FIG. 1 illustrates a state in which the cap assembly CA is open while the electrode assembly EA is housed in the housing HS, and the lower drawing of FIG. 1 illustrates a state in which the battery cell 1 is formed such that the cap assembly CA is closed and the electrode assembly EA is not exposed to the outside. The upper drawing of FIG. 2 and the lower drawing of FIG. 2 are partial cross-sectional views of the upper drawing of FIG. 1 and the lower drawing of FIG. 2, respectively.

In the conventional battery cell 1, the electrode assembly EA may be electrically connected to an electrode terminal ET of the cap assembly CA through a separate connecting member CM welded to and extended from a foil FO of the electrode assembly EA. Here, the connecting member CM may be an extension tab welded to the foil FO.

Specifically, one side of the separate extension member CM is electrically connected to the electrode assembly EA, specifically, the foil FO of the electrode assembly EA, and the other side of the connecting member CM may be electrically connected to the electrode terminal ET of the cap assembly CA.

In addition, the connecting member CM of the conventional battery cell 1 may be configured such that at least a portion thereof may be bent. For example, the connecting member CM may be formed of a thin metal wire or metal plate to be easily bent, so the connecting member CM may be bent into a roughly C-, S-, or L-shape between the assembly EA and the cap assembly CA.

In this structure, the conventional connecting member CM may be damaged during an assembling process of the cap assembly CA, or a bent portion thereof may be broken.

Furthermore, with this structure, the connecting member CM occupies a space between the electrode assembly EA and the cap assembly CA in an internal space of the housing HS, resulting in a reduction in an energy density of the battery cell 1.

On the other hand, the battery cell 10 according to an embodiment of the present disclosure is configured so that a current collector 210 and the foil (foil, 112) are in direct contact with each other, thereby providing greater safety from external impacts and enhancing the energy density.

Hereinafter, the present disclosure will be described in detail with reference to the accompanying drawings. However, this is merely exemplary, and the present disclosure is not limited to the specific embodiments described by way of example.

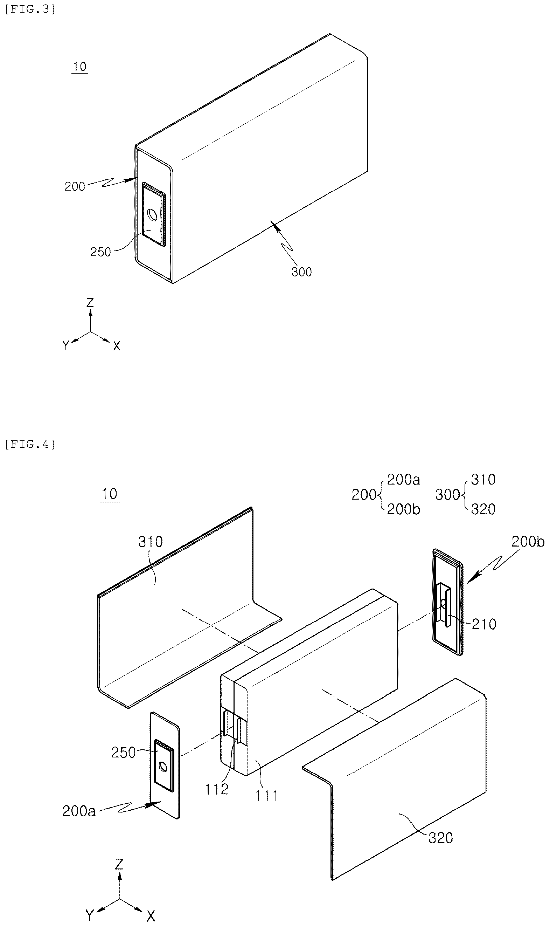

FIG. 3 is a perspective view of a battery cell according to an embodiment, and FIG. 4 is an exploded perspective view of the battery cell according to an embodiment.

Referring to FIGS. 3 and 4, a battery cell according to an embodiment of the present disclosure includes an electrode assembly 100 in which a plurality of electrode plates 110 are stacked and the foil 112 protrudes to at least one side, and a cap assembly 200 disposed to face the electrode assembly 100 in the direction in which the foil 112 protrudes, and including a current collector 210 electrically connected to the foil 112, in which at least a portion of the current collector 210 may be provided to protrude toward the electrode assembly 210 to contact the foil.

Meanwhile, the battery cell 10 according to the present disclosure may be a rechargeable secondary battery. The battery cell 10 may have an angular shape as illustrated in the drawing, but it should be understood that an appearance of the battery cell 10 according to the present disclosure is not limited to that illustrated in the drawing.

The current collector 210 according to an embodiment may be formed in a shape that is bent from the cap assembly 200 toward the electrode assembly 100.

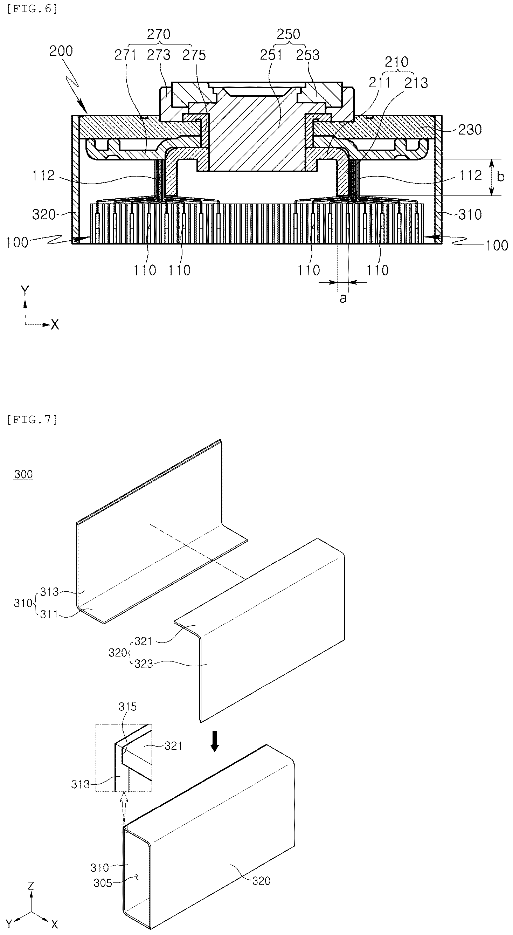

According to the present disclosure, the electrode assembly 100 may be formed by stacking the plurality of electrode plates 110 (see FIG. 6) and a separator (not illustrated) interposed therebetween.

More specifically, in an embodiment, the electrode plate 110 may include a cathode plate having a cathode active material applied to at least one surface of the current collector, and an anode plate having an anode active material applied to at least one surface of the current collector.

That is, each of the plurality of electrode plates 110 of the electrode assembly 100 according to an embodiment may include a coated part 111 coated with the cathode or anode active material and the foil 112 to which no active material is applied.

Meanwhile, each of the plurality of electrode plates 110 according to an embodiment may include the foil 112. For convenience of understanding, even if the foil 112 is expressed singularly in the present disclosure, it should be understood that the foil 112 may be provided in plurality.

The separator may be configured to prevent electrical short-circuiting between the cathode plate and the anode plate and to allow ion flow. For example, the separator may include a porous polymer film or a porous base cloth.

The electrode assembly according to an embodiment may be formed by sequentially stacking the cathode plate and the anode plate, with the separator interposed therebetween. In some embodiments, the electrode assembly may be of a winding type, a stacking type, a z-folding type, or a stack-folding type. However, the electrode assembly 100 of the present disclosure is not particularly limited as long as it has a structure in which the cathode, the separator, and the anode are repeatedly disposed.

In addition, the battery cell 10 according to an embodiment of the present disclosure may be provided by stacking one or more electrode assemblies 100. For example, as illustrated in FIG. 4, two electrode assemblies 100 may be stacked and disposed in a thickness direction (X-axis direction).

The foil 112 may protrude to at least one side of the electrode assembly 100 and be connected to the cap assembly 200. The foil 112 may be electrically connected to the terminal part 250 of the cap assembly 200 through the current collector 210 of the cap assembly 200.

As described below, according to an embodiment of the battery cell 10, the foil 112 may be electrically connected to the cap assembly 200 by directly contacting the current collector 210.

Meanwhile, while FIG. 4 illustrates the foil 112 as protruding to both sides of the electrode assembly 100, the present disclosure is not limited thereto, and it should be understood that any structure in which the foil 112 protrudes toward the cap assembly 200 falls within the scope of the present disclosure.

Meanwhile, the battery cell 1 of the present disclosure may include a case 300 that houses the electrode assembly 1. The case 300 has an opening 305 (see FIG. 7) formed to face the foil 112 or the cap assembly 200, allowing the electrode assembly 100 to be housed internally through the opening.

The case 300 may protect the electrode assembly 100 housed internally from the external environment and maintain the appearance of the battery cell 10. For example, the case may include a metal material such as aluminum, steel, or stainless steel to ensure sufficient rigidity.

However, the material of the case 300 in the present disclosure is not limited thereto, and is not particularly limited as long as it may maintain its appearance to house the electrode assembly internally.

According to an embodiment, the case 300 may include a first casing member 310 that encloses a portion of the electrode assembly 100 and a second casing member 320 that encloses the remainder of the electrode assembly 100.

In this case, the first casing member 310 and the second casing member 320, which are separate structures, are coupled together to enclose and house the electrode assembly 100, thereby improving the efficiency of the assembly process of the battery cell 10.

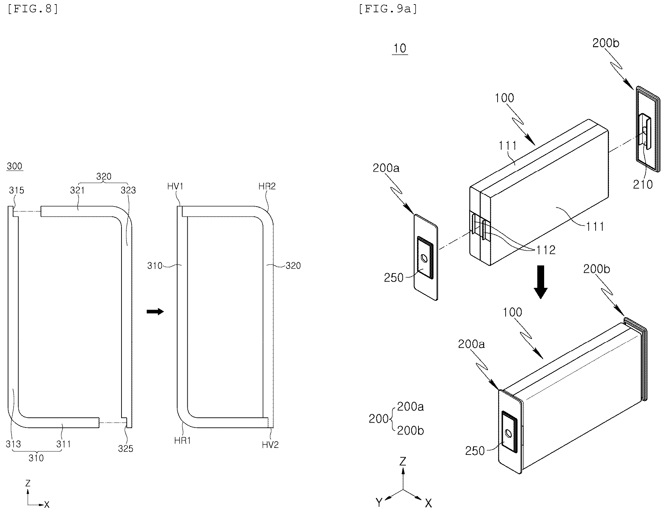

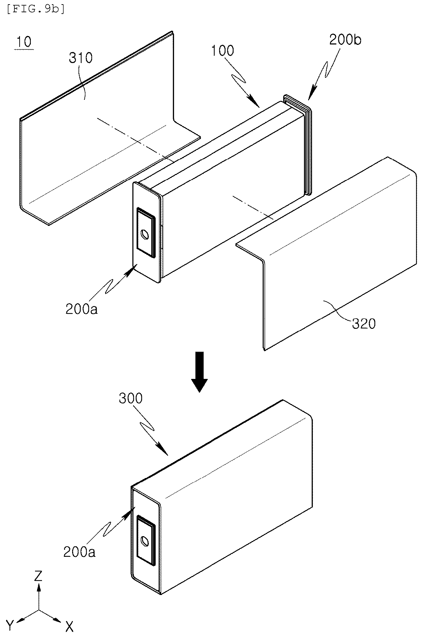

A detailed description thereof will be made later with reference to FIGS. 7 and 9.

According to an embodiment of the present disclosure, the battery cell 10 may include at least one cap assembly 200 electrically connected to the foil 112. The cap assembly 200 may be disposed on at least one side of the electrode assembly 100 to face the foil 112 and electrically connected to the foil 112.

For example, as illustrated in FIG. 4, the foil 112 may protrude with different polarities on both sides along a longitudinal direction (Y-axis direction) of the electrode assembly 100, and the cap assembly 200 may include a first cap assembly 200a disposed on one side of the electrode assembly 100 and a second cap assembly 200b disposed on the other side of the electrode assembly 100.

In this way, the cap assembly 200 may be disposed on both sides of the electrode assembly 100 to face the foil 112, and may be electrically connected to the facing foil 112. In addition, the first cap assembly 200a and the second cap assembly 200b may be disposed in different directions with respect to the electrode assembly 100 and may have different polarities.

Meanwhile, the first cap assembly 200a and the second cap assembly 200b are only intended to distinguish the positions where they are disposed with respect to the electrode assembly 100, and specific shapes and configurations thereof may be identical. Accordingly, in the present disclosure, the first cap assembly 200a and the second cap assembly 200b are not separately distinguished, but are used interchangeably with the cap assembly 200 for convenience.

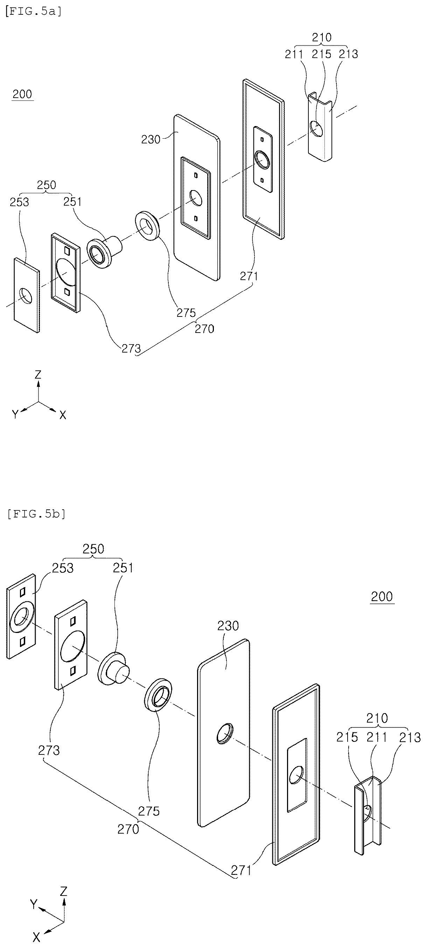

FIG. 5A is an exploded perspective view of the cap assembly according to an embodiment, FIG. 5B is a perspective view of FIG. 5A taken from another direction, and FIG. 6 is a cross-sectional view of a portion of the battery cell according to an embodiment.

Referring to FIGS. 5 and 6 together, the cap assembly 200 according to an embodiment may include the current collector 210 that is in contact with and electrically connected to the foil 112, a cap plate 230 that is positioned to face a side surface of an electrode assembly 100 on which the foil 112 is formed and covers an opening 305 of the case 310, and a terminal part 250 that is electrically connected to the current collector 210 and is exposed to the outside from the cap plate 230 and connectable to an external power supply.

The current collector 210 may be formed of an electrically conductive material. The current collector 210 may have one side contacting the foil 112 and the other side contacting the terminal part 250, thereby electrically connecting the electrode assembly 100 and the terminal part 250. The current collector 210 may protrude from the terminal part 250 toward the foil 112.

At least a portion of the current collector 210 may be in contact with and coupled to the foil 112. For example, the current collector 210 and the foil 112 may be electrically connected by being welded to each other through ultrasonic welding, laser welding, or the like. However, the present disclosure is not limited to the welding method of the foil 112 and the current collector 210, and should be understood to include any structure in which the foil 112 and the current collector 210 may be electrically connected to each other.

The current collector 210 may include a first current collecting member 211 that contacts the terminal part 250 and a second current collecting member 213 that protrudes from the first current collecting member 211 toward the electrode assembly 100 to directly contact the foil 112.

In addition, according to an embodiment, the second current collecting member 213 may be formed in a shape in which it is bent toward the electrode assembly 100 from an end portion of the first current collecting member 211. That is, the second current collecting member 213 is illustrated in the drawing in the shape in which it is bent from the end portion of the first current collecting member 211, but the shape of the second current collecting member 213 is not necessarily limited thereto.

Meanwhile, the foil 210 according to an embodiment may be formed of a rigid metallic material, so the electrical connection with the foil 112 may be stably maintained. On the other hand, referring to FIGS. 1 and 2, the cap assembly CA of the conventional battery cell 1 may be electrically connected to the electrode assembly EA through the flexible extension member CM, so the extension member CM may take up a lot of space between the cap assembly CA and the electrode assembly EA, and be easily broken by external impact.

According to the present disclosure, the current collector 210 may be provided so that one side thereof is supported by the terminal part 250, and the other side thereof protrudes and directly contacts the foil 112, so the extension member CM of the conventional battery cell 1 is not separately required, and the durability and reliability may be improved when connecting the cap assembly 200 to the electrode assembly 100.

In other words, the structure of the current collector 210 according to the present disclosure eliminates the need for a separate extension accessory between the electrode assembly 100 and the cap assembly 200, thereby allowing for greater utilization of the space between the electrode assembly 100 and the cap assembly 200, and preventing the extension accessory from breaking due to external impact.

In this way, the electrical connection between the foil 112 and the terminal part 250 may be implemented simply and reliably through a single current collector 210.

More specifically, referring to FIG. 6, the current collector 210 may be configured to include an "L" shape in which it extends in the thickness direction (X-axis direction) of the electrode assembly 100 and is then bent and extends in the longitudinal direction (Y-axis direction) of the electrode assembly 100.

In addition, the second current collecting member 213 and the foil 211 may be provided to contact each other in the direction perpendicular to the direction in which the foil 211 protrudes.

More specifically, referring to FIG. 1 and FIG. 9A to be described later, in the conventional battery cell 1, the connecting member CM and the foil FO are welded in the longitudinal direction (X-axis direction) while the cap assembly CA is open from the housing HS. In the battery cell 10 of the present disclosure, the foil 112 and the current collector 210 are directly welded before the case 300 is coupled, so the assembly process is simpler, and the foil 112 may be prevented from becoming damaged during the process of connecting the cap assembly 200.

Referring to FIG. 6, according to an embodiment of the present disclosure, the current collector 210 may contact the foil 212 in a direction parallel to the direction in which the plurality of electrode plates 110 of the electrode assembly 100 are stacked.

The plurality of electrode plates 110 are stacked in the thickness direction (X-axis direction) of the electrode assembly 100. Here, the second current collecting member 213 of the current collector 210 may contact the foil 112 in the direction parallel to the thickness direction (X-axis direction) of the electrode assembly 100.

Meanwhile, when the current collector 210, specifically the second current collecting member 213, and the foil 112 are connected, it is advantageous for the stability of the electrode assembly 100 to prevent the foil 112 from being bent as much as possible.

According to an embodiment of the present disclosure, the foil 112 protrudes in one direction (+Y-axis direction) and the second current collecting member protrudes in the other direction (-Y-axis direction), with respect to the longitudinal direction (Y-axis direction) of the electrode assembly 100, and the second current collecting member 213 and the foil 112 may contact each other to face each other in a direction perpendicular to the longitudinal direction, specifically, in the thickness direction (X-axis direction) (see FIG. 6).

On the other hand, referring back to FIGS. 1 and 2, the conventional battery cell 1 has a structure in which the foil FO and the extension member CM are welded in the longitudinal direction (Y-axis direction) while the cap assembly CA is open, and then the cap assembly CA is closed, so the welded area is disposed to face the longitudinal direction.

According to an embodiment, the contact area or welding area between the foil 112 and the current collector 210 may be disposed to overlap and face each other in the thickness direction. With this structure, unlike the conventional battery cell 1 (see the lower drawing of FIG. 2), the battery cell 10 according to an embodiment of the present disclosure may minimize the bending of the foil 112 in the thickness direction (X-axis direction).

That is, the contact area between the foil 112 and the current collector 210 may be increased, while preventing or minimizing the bending of the foil 112.

According to an embodiment of the present disclosure, the electrode assembly 100 may be provided in plurality. When the plurality of electrode assemblies 100 are provided, the plurality of second current collecting members 213 may also be provided to contact each of the current collectors 112.

For example, referring to FIG. 6, two electrode assemblies 100 may be stacked in the thickness direction (X-axis direction), and two second current collecting members 213 may be provided in a "⊏" shape in which it may extend and be bent from both ends of the first current collecting member 211 extending in the thickness direction toward the electrode assemblies 100 and contacts the foils 112 of different electrode assemblies 100.

In this way, when the plurality of electrode assemblies 100 are provided, the foil of the plurality of electrode assemblies 100 disposed at the outermost portion may contact the second current collecting member 213 at an outer side of the second current collecting member 213 disposed at the outermost portion.

Specifically, referring to FIG. 6, the left foil 112 and the right foil 112 may face a left outer side surface and a right outer side surface of the current collecting member 213, respectively. In this case, as illustrated in the drawing, the foil 112 may contact the outer side surface of the second current collecting member 213. That is, based on the drawing, the left foil 112 may contact a left side of the second current collecting member 213, but the right foil 112 may contact a right side of the second current collecting member 213. With this structure, the welding of the foil 112 and the second current collecting member 213 may be facilitated more.

Meanwhile, as another example, when one electrode assembly 100 is provided, the second current collecting member may be provided in an "L" shape in which it is bent and extends from one end of the first current collecting member.

As another example, when three electrode assemblies 100 are stacked in the thickness direction, three second current collecting members may be provided in a structure such as "E".

That is, the number of second current collecting members 213 may be the same as the number of electrode assemblies 100, and may be provided to contact the foil 112 of each electrode assembly 100.

Meanwhile, in the drawing, one second current collecting member 213 and one foil 112 are illustrated as being in surface contact on one side. However, two foils 112 may be in double-sided contact with one side and the other side of one second current collecting member 213.

Meanwhile, in an embodiment, a thickness a of the second current collecting member 213 may be provided within a predetermined range in consideration of the electrical connection with the foil 112 and the bending shape. Specifically, considering the electrical resistance value with respect to the foil 112, the greater the thickness a of the second current collecting member 213, the more advantageous it is. However, when the thickness a of the second current collecting member 213 is excessively thick, the interference with adjacent members may occur or it may be difficult to implement the bent shape.

For example, the thickness a of the second current collecting member 213 may be 0.3 mm or more. When the thickness a of the second current collecting member 213 is less than 0.3 mm, the electrical resistance value with respect to the foil 112 may increase and the foil 112 may be easily broken. In addition, the thickness a of the second current collecting member 213 may be 4mm or less. When the thickness a of the second current collecting member 213 is greater than 4 mm, it may be difficult to bend the second current collecting member 213. That is, the thickness a of the second current collecting member 213 may be 0.3 mm to 4 mm.

More specifically, it may be advantageous in terms of energy efficiency and securing mechanical rigidity that the thickness a of the second current collecting member (213) is 0.5 mm or more. In addition, it may be advantageous for implementing the bent shape that the thickness a of the second current collecting member 213 is 2 mm or less. That is, the thickness a of the second current collecting member 213 may be 0.5mm to 2mm.

Meanwhile, the extension member CM of the conventional battery cell 1 should be bent extensively within a narrow space, as illustrated in FIG. 2, and therefore, it is advantageous for the thickness to be smaller. As a result, the electrical resistance between the extension member CM and the foil FO may be relatively high. On the other hand, in the battery cell 10 of the present disclosure, the current collector 210 is in direct contact with and electrically connected to the foil 112 without a separate extension member, its thickness a may be designed to be thicker than the extension member CM of the conventional battery cell 1.

With this structure, the battery cell 10 according to the present disclosure may have a lower electrical resistance value and improved energy efficiency.

In addition, in an embodiment, an extension length b of the second current collecting member 213 may be provided within a predetermined range in consideration of the welding with the foil 112 and the contact area with the foil 112. Specifically, considering the area welded by contact with the foil 112, the resistance value, etc., it may be advantageous for the extension length b of the second current collecting member 213 to be greater; however, considering interference between the electrode assembly 100 and the cap assembly 200, the extension length b may be provided within a predetermined range.

For example, considering the contact area with the foil 112, the extension length b of the second current collecting member 213 may be 2 mm or more. When the extension length b is less than 2 mm, the contact area between the second current collecting member 213 and the foil 112 is reduced, which increases the electrical resistance and may lead to easy separation from external impact. In addition, considering the length of the electrode assembly 100 in the longitudinal direction (Y-axis direction) and the interference with the electrode assembly 100 during the assembly, the extension length b of the second current collecting member 213 may be 10 mm or less. When the extension length b is 10 mm or more, the length of the electrode assembly 100 in the longitudinal direction (Y-axis direction) may be reduced to reduce the amount of energy or excessively pressurize the side surface of the electrode assembly 100 during the assembly, which is disadvantageous in terms of durability. That is, the extension length b of the second current collecting member 213 may be provided in the range of 2 mm to 10 mm.

More specifically, the extension length b of the second current collecting member 213 may be 4 mm or more. When the foil 112 and the second current collecting member 213 are coupled, the welding tool may grasp the welding area. However, when the extension length b is less than 4 mm, it may be difficult for the welding tool to enter. That is, the extension length of the second current collecting member 213 may be 4 mm to 10 mm.

Meanwhile, the present disclosure is not necessarily limited to the thickness a and the extension length b of the second current collecting member 213 described above, and the values thereof may vary proportionally depending on the size of each component of the battery cell 10. In addition, the thickness a and the extension length b of the second current collecting member 213 are not particularly limited, as long as they are values sufficient to allow the second current collecting member 213 to be in direct contact with and coupled to the foil 112.

In addition, according to an embodiment, the current collecting member 210 is formed with a terminal hole 215 through which at least a portion of the terminal part 250 is inserted into the first current collecting member 211, so the first current collecting member 211 may house the terminal part 250 while enclosing one side thereof, and more specifically, one side of a rivet terminal 251 to be described later. Through this configuration, the volume of the electrode assembly 100 in the longitudinal direction (Y-axis direction) may be reduced and the energy efficiency may be improved.

According to an embodiment, one side of the first current collecting member 211 may be bent and extend to correspond to one side of the rivet terminal 251 to be described later. That is, the current collecting member 210 may be provided in a shape like a "7" that is bent in an "L" shape at two places.

The cap plate 230 is formed of a material having a predetermined rigidity to close the opening 305 of the case 300 and protect the electrode assembly 100. For example, the cap plate 230 may be formed of the same material as the case 300 to improve assembly integrity.

One side surface of the cap plate 230 is a surface exposed from the outside of the battery cell 10 and has the terminal part 250 provided thereon, and the other side surface is a surface facing the side surface of the electrode assembly 100 in the internal space of the battery cell 10 and has the current collector 210 provided thereon. The cap plate 230 may support the arrangement position of the terminal part 250 and the current collector 210.

The terminal part 250 is formed of an electrically conductive material and is exposed to the outside through the cap plate 230, thereby connecting the battery cell 10 to the external power supply. The terminal part 250 may include the terminal rivet 251 formed in a pin shape penetrating the cap plate 230 and contacting the current collector 210, and a port terminal port 253 connected to the terminal rivet 251 and disposed on one side surface of the cap plate 230.

The terminal rivet 251 may penetrate the cap plate 230 and have one end disposed between the cap plate 230 and the electrode assembly 100, so as to be in contact with and electrically connected to the first current collecting member 211 of the current collector 210.

The terminal port 253 may be electrically connected by contacting the terminal rivet 251, and may be exposed from the outside of the battery cell 10 to be electrically connected to the external power supply.

In addition, the cap assembly 200 according to an embodiment may further include an insulating part 270 formed of an electrically insulating material to insulate between the current collector 210 and the cap plate 230, and between the terminal part 250 and the cap plate 230.

The insulating part 270 may include an insulating plate 271 disposed between the current collector 210 and the cap plate 230 to electrically isolate the current collector 210 and the cap plate 230 from each other, an insulating cap 273 disposed between the terminal port 253 and the cap plate 230 to electrically isolate the terminal port 253 and the cap plate 230 from each other, and an insulating gasket 275 disposed between the terminal rivet 251 and the cap plate 230 to electrically isolate the terminal rivet 251 and the cap plate 230 from each other.

The insulating plate 271 is provided in a plate shape corresponding to the cap plate 230 and may house at least a portion of the current collector 210 through a groove disposed on a surface facing the electrode assembly 100.

The insulating cap 273 may be provided to enclose at least a portion of the terminal part 250 exposed to the outside of the cap plate 230, specifically the terminal port 253 and the terminal rivet 251.

The insulating gasket 275 may be disposed between an inner surface of the cap plate 230 through which the terminal rivet 251 penetrates and an outer surface of the terminal rivet 251, thereby electrically insulating the cap plate 230 and the terminal rivet 251 from each other.

FIG. 7 is a perspective view of the case according to an embodiment, and FIG. 8 is a cross-sectional view of the case according to an embodiment.

Referring to FIGS. 7 and 8, the case 300 may have an internal space that encloses and houses the electrode assembly 100, and at least one side of the case 300 may be provided with the opening 305 to house the electrode assembly 100. The opening 305 of the case 300 may be formed by opening the surface facing the foil 112 of the electrode assembly 100.

For example, when the foils 112 are formed on both sides of the electrode assembly 100 in the longitudinal direction (X-axis direction), as illustrated in the drawing of FIG. 7, the openings 305 may also be formed on corresponding sides.

In addition, according to an embodiment of the present disclosure, the case 300 may include a plurality of casing members that are provided in a structure in which they are separated from each other, each configured to separately enclose at least a portion of the electrode assembly 100.

For example, referring to FIG. 7, the case 300 may include the first casing member 310 that encloses a portion of the electrode assembly 100 and the second casing member 320 that encloses the remainder.

The first casing member 310 and the second casing member 320 have a structure separated from each other, and the first casing member 310 and the second casing member 320 face each other and are coupled to each other so that the electrode assembly 100 may be housed therein (see FIG. 9B).

For example, the first casing member 310 may be provided to enclose the upper surface (facing the Z-axis direction) and one side surface (facing the X-axis direction) of the electrode assembly 100 that are disposed in the direction in which the foil 112 protrudes or the direction perpendicular to the opening 305, and the second casing member 320 may be provided to enclose the lower surface facing the upper surface of the electrode assembly 100 and the other side surface facing the one side surface of the electrode assembly 100.

Here, "enclosing" may mean that the casing member covers the electrode assembly 100 so that the electrode assembly 100 is not exposed to the outside. Alternatively, it may mean that the casing member is disposed to face at least one surface of the electrode assembly 100 and to cover the electrode assembly 100.

According to an embodiment, the first casing member 310 may include a first support part 311 and a first extension 313 that is bent and extends from the first support part 311. In addition, the second casing member 320 may include a second support part 321 and a second extension 323 that is bent and extends from the second support part 321.

In addition, the first casing member 310 and the second casing member 320 may be formed in the same structure in which they are centrally symmetrical with respect to the electrode assembly 100.

In other words, referring to FIG. 8, the first casing member 310 and the second casing member 320 may be symmetrical with respect to each other in a diagonal direction (X-axis and Z-axis directions in the drawing) based on their side surfaces.

With the structure, an end portion of the first support part 311 and an end portion of the second extension 323 may be coupled to each other, and an end portion of the first extension 313 and an end portion of the second support part 321 may be coupled to each other, thereby coupling the first casing member 310 and the second casing member 320 to each other.

In addition, in an embodiment, stepped portions 315 and 325 may be formed at one end of the first casing member 310 and the second casing member 320, respectively, so as to engage with the other end of the second casing member 320 and the first casing member 310, respectively.

For example, the first stepped portion 315 may be formed at an end portion of the first extension surface 313, and the second stepped portion 325 may be formed at an end portion of the second extension surface 323.

In this case, the first stepped portion 315 and the end portion of the second support portion 321 are engaged with and coupled to each other, and the second stepped portion 325 and the end portion of the first support portion 311 are engaged with and coupled to each other, thereby improving the assembly stability.

Meanwhile, in the drawing, the first casing member 310 and the second casing member 320 may formed in a roughly **"L"** shape to enclose two surfaces. However, the present disclosure is not limited thereto.

For example, the first casing member 310 may be provided in a straight shape to enclose one surface of the electrode assembly, and the second casing member 320 may be provided in a "⊏" shape to enclose three surfaces of the electrode assembly.

Meanwhile, according to an embodiment of the present disclosure, as illustrated in the right drawing of FIG. 8, the case may be provided with a plurality of curved portions HR1 and HR2 having a predetermined curvature on the outside and a plurality of right-angled portions HV1 and HV2 having no curvature and formed at approximately right angles.

For example, as illustrated in the drawing, the case 300 may have a roughly rectangular shape when viewed from the side surface where the opening 305 is formed. Here, two of the four corners may be formed as curved portions HR1 and HR2, and the remaining two may be formed as right-angled portions HV1 and HV2.

In an embodiment, the curved portions HR1 and HR2 may be portions where the casing members 310 and 320 are bent.

For example, the curved portions HR1 and HR2 may include a first curved portion HR1 formed by bending the first casing member 310 and a second curved portion HR2 formed by bending the second casing member 320.

In an embodiment, the right-angled portions HV1 and HV2 may be portions where the casing members are coupled to each other.

For example, the right-angled portions HV1 and HV2 may include the first right-angled portion HV1 formed by coupling the other side 313 of the first casing member 310 and one side 321 of the second casing member 320, and the second right-angled portion HV2 formed by coupling the other side 323 of the second casing member 320 and one side 311 of the first casing member 310.

In this structure, when the first casing member 310 and the second casing member 320 are diagonally symmetrical with each other, the first curved portion HR1 and the second curved portion HR2 may be disposed to face each other diagonally, and the first right-angled portion HV1 and the second right-angled portion HV2 may be disposed to face each other diagonally.

This structure may increase the internal space of the case 300 and an external cooling surface area of the battery cell 10.

In addition, according to an embodiment, when the battery cell 10 is disposed upright as illustrated in the drawing, the battery cell 10 may be rotated and laid down by the curved portion (HR1 in the drawing) disposed at the lower portion of the battery cell 10. That is, when a single battery cell 10 is disposed upright, the single battery cell 10 may be laid down to form a stable structure by the curved portions HR1 and HR2.

Meanwhile, the battery cell 10 according to the present disclosure may be manufactured by assembling the case 300 to house the electrode assembly 100 by coupling the plurality of casing members (e.g., the first casing member 310 and the second casing member 320) separated from each other.

FIG. 9 is a diagram illustrating a manufacturing sequence of the battery cell 10 according to an embodiment of the present disclosure.

Referring to FIG. 9A, the battery cell 10 according to an embodiment of the present disclosure may include the cap assembly 200 including the current collector 210 electrically connected to the foils 112, specifically a first cap assembly 200a and a second cap assembly 200b, respectively, disposed on both sides of the electrode assembly 100 in which the plurality of electrode plates 110 are stacked and the foils 112 protrude to both sides (in the Y-axis direction in the drawings), thereby enclosing both side surfaces of the electrode assembly 100.

That is, in the battery cell 10, the first cap assembly 200a and the second cap assembly 200b may respectively be assembled on both sides of the electrode assembly 100 in which the foils 112 protrude to both sides.

Next, referring to FIG. 9B, the battery cell 10 according to an embodiment of the present disclosure may house the electrode assembly 100 by enclosing the exposed surface of the electrode assembly 100 with the case 300. In this case, the case 300 is provided so as to be separable from each other, so that the first case member 310 enclosing a portion of the electrode assembly 100 and the second case member 320 enclosing the remainder are coupled together in the direction perpendicular to the direction (X-axis direction) in which the foil protrudes, thereby housing the electrode assembly 100.

That is, the first casing member 310 and the second casing member 320 may be coupled to each other so as to enclose the electrode assembly 100 to which the cap assembly 200 are connected to both sides thereof, respectively, thereby housing and assembling the electrode assembly 100.

Through this structure, the battery cell 10 according to the present disclosure may house the electrode assembly 100 within the electrode assembly 100 while the cap assembly 200 is connected to both sides of the electrode assembly 100, thereby simplifying the assembly process.

Meanwhile, referring again to FIG. 1, since the housing HS (case) of the conventional battery cell 1 is formed integrally and is not separated, the interference occurs between the cap assembly CA and the housing HS, so the electrode assembly EA may not be housed inside the housing HS while the cap assembly CA is connected to both sides of the electrode assembly 100, thereby making the assembly process complicate.

Specifically, in the conventional battery cell 1, due to the interference caused by the difference in the cross-sectional area of the cap assembly CA and the opening area of the housing HS, it is difficult to house the electrode assembly EA within the housing HS while the cap assembly CA is connected to both sides of the electrode assembly EA, respectively.

Accordingly, in the manufacturing process of the conventional battery cell 1, in a structure where the cap assembly CA is connected to both sides of the electrode assembly EA, the process of housing the electrode assembly EA in the housing HS and then coupling the cap assembly CA is essential.

Alternatively, the case where the electrode assembly EA is housed in the housing HS and then the cap assembly CA is assembled on both sides of the electrode assembly EA may also be considered. However, in this case, due to the interference between the housing HS and the cap assembly CA, it may be difficult to weld and couple the connecting member CM during the assembly.

Therefore, connecting the cap assembly CA to both sides before housing the electrode assembly EA within the housing HS is advantageous in terms of productivity and efficiency during the assembly process. However, as described above, this assembly process is difficult to perform in the conventional battery cell 1.

In contrast, referring to FIG. 9, since the battery cell 10 of the present disclosure houses the electrode assembly 100 by combining the plurality of casing members 310 and 320 as described above, even if the cap assembly 200 is connected to both sides of the electrode assembly 100, the electrode assembly 100 may be housed in the case 300, thereby improving the assembly process.

In other words, the manufacturing process of the battery cell 10 of the present disclosure may be completed simply by housing the electrode assembly 100 within the case 300. Since an additional process of coupling the cap assembly 200 thereafter is not necessarily required, the assembly process may be simplified. In addition, this simple assembly process may improve the stability of the electrical connection between the foil 211 and the terminal part 250.

In addition, in the conventional battery cell 1, the foil 112 and the extension member CM facing each other in the longitudinal direction (Y-axis direction) are welded to each other (see the upper drawings of FIGS. 1 and 2) while the cap assembly CA is opened to open the housing HS, and then the cap assembly CA is closed to close the housing HS (see the lower drawings of FIGS. 1 and 2) to connect the cap assembly CA to the electrode assembly EA.

On the other hand, in the battery cell 10 of the present disclosure, the foil 112 and the current collector 210 facing each other in the thickness direction (X-axis direction) may be welded to each other while the electrode assembly 100 and the cap assembly 200 are disposed to face each other in the longitudinal direction (Y-axis direction), thereby connecting the cap assembly 200 to the electrode assembly 100.

As such, according to the method of manufacturing a battery cell 10 of the present disclosure, the welding is performed while the position of the cap assembly 200 is finally aligned, thereby eliminating the risk of warping the welded portion. In addition, since the foil 112 contacts the current collector 210 in the direction in which the foil 112 does not protrude, the bending of the foil 112 may be prevented as much as possible, and the connection of the cap assembly 200 may be prevented from interfering with the case 300.

Meanwhile, at least one battery cell 10 according to the present disclosure may be stacked and installed in a battery module 30 or a battery pack 50. The battery cells 10 according to embodiments may be provided in the battery module 30 in the form in which they are sequentially stacked, and the battery module 30 may be provided in the battery pack 50.

That is, the battery module 30 according to an embodiment of the present disclosure may include the battery cells 10 according to the embodiments described above, and the battery pack 50 according to an embodiment of the present disclosure may include the battery module 30.

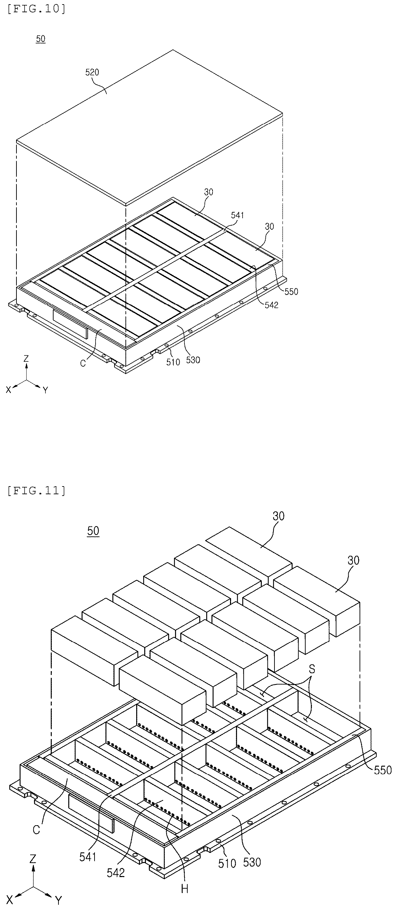

FIG. 10 is a perspective view of a battery module and a battery pack including battery cells according to embodiments, and FIG. 11 is a perspective view illustrating a state in which the battery module is separated from FIG. 10.

Referring to FIGS. 10 and 11 together, the battery module 30 according to an embodiment of the present disclosure may include one or more battery cells 10 according to the embodiments described above, sequentially stacked in the thickness direction (X-axis direction). The battery pack 50 may be provided with a housing space S to house the battery module 30.

The battery pack 50 may include the housing (not illustrated) that houses one or more battery modules 30 or battery cells 10. Although the drawing illustrates that the battery module 30 is housed, the present disclosure is not limited thereto, and the plurality of battery cells 10 may be stacked in the X-axis direction or the Y-axis direction in the housing space S.

Hereinafter, although the structure in which the battery module 30 is housed in the battery pack 50 is described, it should be understood that the present disclosure also includes the structure in which the battery cell 10 is housed instead of the battery module 30.

The housing of the battery pack 50 may include a bottom member 510 that supports a bottom surface of the battery module 30, a cover member 520 that covers a top surface of the battery module 30, and a side wall member 530 that connects between the bottom member 510 and the cover member 520.

The battery pack 50 may include partition walls 541 and 542 that cross at least a portion of the housing space S. For example, the housing space S may be divided into multiple spaces by the partition walls 541 and 542. The partition walls 541 and 542 may be installed across the housing space S to reinforce the rigidity of the battery pack 50.

In an embodiment, the partition walls 541 and 542 may include the first partition wall 541 and the second partition wall 542 arranged perpendicular to each other. In an embodiment, at least a portion of the partition walls 541 and 542 may include venting holes H to guide a path of gas and/or flame generated from the battery cell 10 or the battery module 30.

In an embodiment, the battery device 100 may include a duct member 550. A flow space may be formed within the duct member 550 through which gas and/or flame discharged from the battery cell 10 or the battery module 30 flow. The duct member 550 may be disposed inside the battery pack 50. The flow space of the duct member 550 may be connected to the venting hole H of the second partition wall 542. For example, the gas and/or flame generated from the battery cell 10 or the battery module 30 may pass through the venting hole H of the second partition wall 542 and the flow space of the duct member 550 to be transmitted to the outside of the battery pack 50.

In addition, the battery pack 50 may include a battery control unit C for controlling the battery cell 10 and/or the battery module 30. The battery control unit C may be disposed inside the battery pack 50. The battery control unit C may include a battery management system (BMS). The configuration of the battery control unit C is well known in various forms, and therefore, a detailed description thereof will be omitted. In an embodiment, the battery control unit C may be referred to as a processor.

Meanwhile, the structures of the battery module 30 and the battery pack 50 described above are exemplary. For example, in FIGS. 10 and 11, although the battery pack 50 has been described as housing the battery module 30 including the battery cell 10 according to the embodiments described above, the battery pack 50 only needs to include the battery cell 10 therein. That is, even in the case where the plurality of battery cells 10 according to embodiments are sequentially stacked directly in the housing space S, it may be considered that the battery cells 10 are included in the battery pack 50 according to an embodiment of the present disclosure.

While various embodiments of the present disclosure have been shown and described above, it will be apparent to those skilled in the art that modifications and variations could be made without departing from the scope of the present disclosure as defined by the appended claims.

In addition, the embodiments may be implemented by deleting some components from the above-described embodiments, and each embodiment may be implemented in combination with each other.

In addition, contents described above are merely an example of applying the principles of the present disclosure, and other components may be included without departing from the scope of the present disclosure.

## Claims

1. A battery cell, comprising:
an electrode assembly in which a plurality of electrode plates are stacked and a foil protrudes to at least one side along a first direction; and
a cap assembly disposed to face the electrode assembly in the direction in which the foil protrudes, and including a current collector electrically connected to the foil,
wherein at least a portion of the current collector protrudes toward the electrode assembly in the first direction to face and contact the foil in a direction perpendicular to the first direction.

2. The battery cell of claim 1, wherein the cap assembly further includes a terminal part, at least a portion of which is exposed to an outside and connected to an external power supply, and
the current collector contacts the terminal part and the foil, respectively, to electrically connect the foil and the terminal part.

3. The battery cell of claim 2, wherein the current collector includes:
a first current collecting member contacting the terminal part; and
a second current collecting member protruding from the first current collecting member toward the electrode assembly and contacting the foil.

4. The battery cell of claim 3, wherein the foil and the second current collecting member face each other in the direction in which the plurality of electrode plates are stacked.

5. The battery cell of claim 3, wherein the second current collecting member is bent into an **"L"-shape** on at least one side of the first current collecting member.

6. The battery cell of claim 3, wherein the electrode assembly is provided in plurality, and
the second current collecting member is provided in a number corresponding to the number of electrode assemblies, and each of the second current collecting members contacts the foil of a respective one of the plurality of electrode assemblies.

7. The battery cell of claim 6, wherein the plurality of second current collecting members face each other in the direction perpendicular to the direction in which the foil protrudes.

8. The battery cell of claim 6, wherein the foil of the plurality of electrode assemblies disposed at an outermost portion faces and contacts an outer side surface of the second current collecting member disposed at an outermost portion.

9. The battery cell of claim 3, wherein a thickness (a) of the second current collecting member is 0.3 mm to 4 mm.

10. The battery cell of claim 3, wherein an extended length b of the second current collecting member is 4 mm to 10 mm.

11. The battery cell of claim 1, wherein the foil protrudes to both sides of the electrode assembly, and
the cap assembly is disposed on both sides of the electrode assembly, respectively, to face each of the foils.

12. The battery cell of claim 1, further comprising:
a case housing the electrode assembly and having an opening facing the foil,
wherein the cap assembly is coupled to the case to close the opening of the case.

13. The battery cell of claim 12, wherein the case includes a first casing member that encloses a portion of the electrode assembly and a second casing member that encloses the remainder, and the first casing member and the second casing member, which are separated from each other, are coupled to each other to house the electrode assembly.

14. The battery cell of claim 13, wherein the foil protrudes to both sides of the electrode assembly, and
one of the first casing member and the second casing member encloses the upper surface of the electrode assembly facing the direction perpendicular to the direction in which the foil protrudes and one side surface of the electrode assembly, and
the other of the first casing member and the second casing member encloses a lower surface of the electrode assembly facing the upper surface of the electrode assembly and the other side surface of the electrode assembly.

15. The battery cell of claim 13, wherein the first casing member and the second casing member have a same shape as each other and are disposed to be centrally symmetric with respect to the electrode assembly.

16. The battery cell of claim 15, wherein the first casing member and the second casing member are bent to enclose at least a portion of the electrode assembly and provided in an "L"-shape.

17. The battery cell of claim 12, wherein the case has four corners relative to a side surface, and
two of the four corners are formed with a rounded portion, and the remaining two are formed with a right-angled portion.

18. A battery pack, comprising:
a housing having one or more housing spaces; and
a plurality of battery cells stacked within the housing,
wherein each battery cell includes:
an electrode assembly in which a plurality of electrode plates are stacked and a foil protrudes to at least one side along a first direction; and
a cap assembly disposed to face the electrode assembly in the direction in which the foil protrudes, and including a current collector electrically connected to the foil,
at least a portion of the current collector protrudes toward the electrode assembly in the first direction to face and contact the foil in a direction perpendicular to the first direction, and
the plurality of battery cells are stacked in the housing space along the direction in which the plurality of electrode plates are stacked.

19. A method of manufacturing a battery cell, comprising:
disposing a cap assembly including a current collector electrically connected to a foil on both sides of an electrode assembly in which a plurality of electrode plates are stacked and the foil protrudes to both sides, and connecting the cap assembly to both sides of the electrode assembly; and
covering an exposed surface of the electrode assembly exposed from the cap assembly with a case to house the electrode assembly.

20. The method of claim 19, wherein the case includes a first casing member that encloses a portion of the exposed surface of the electrode assembly and a second casing member that encloses the remainder,
the first casing member and the second casing member are coupled to each other in a direction perpendicular to a direction in which the foil protrudes to house the electrode assembly, and
in the connecting of the cap assembly, the foil and the current collecting member overlap each other in the direction perpendicular to the direction in which the foil protrudes, and are welded.
